# EUROPEAN PATENT SPECIFICATION

(11) **EP 3 909 908 B1**
(45) Date of publication and mention of the grant of the patent: **02.08.2023**
(21) Application number: 21170251.9
(22) Date of filing: 23.04.2021
(51) Int. Cl.: B66F 9/075

(54) **A TRUCK MOUNTED FORKLIFT**
AN EINEM LASTWAGEN MONTIERTER GABELSTAPLER
CHARIOT ÉLÉVATEUR À FOURCHE MONTÉ SUR CAMION

(30) Priority: 24.04.2020 GB 202006034
(43) Date of publication of application: 17.11.2021
(73) Proprietor: Cargotec Engineering Ireland Limited, Dundalk County, Louth (IE)
(72) Inventor: Turnbull, Kevin, 17 Lisroland View, Knockbridge, Dundalk, County Louth (IE)
(74) Representative: O'Connor, Michael Donal

(56) References cited:
- EP-A1- 2 495 122
- WO-A1-2008/129447
- DE-A1- 10 061 221
- JP-A- H07 170 609
- US-A1- 2007 251 746

## Description

This invention relates to a truck mounted forklift (TMFL). More specifically, the invention relates to an electric truck mounted forklift.

TMFLs are a very useful type of forklift truck that may be mounted on the rear of a trailer and transported to and from a customer's premises. Once there, the TMFL may be used to load and unload goods to or from the trailer. Accordingly, the TMFL obviates the need for the customer to have access to, or own, their own forklift.

These TMFLs are of necessity very lightweight as any increase in forklift weight reduces the carrying capacity of the carrying vehicle which would otherwise be used for the transport of goods on the carrying vehicle. Furthermore, any increase in weight of the forklift requires heavier tines and more robust mounting arrangements which in turn further increases the weight of the forklift and mounting arrangements and further reduces the carrying capacity of the carrying vehicle. For these reasons, it is also not possible for TMFLs to be provided with counterweights as would commonly be found in other types of forklifts.

In order to counteract the limitations brought on by the lack of counterweights, TMFLs are provided with a U-shaped chassis. In this way, loads can be picked up, put down and transported with the majority, if not all of the weight of the load located rearward of the front wheels. In this way, the TMFL will be able to lift significantly heavier loads than would otherwise be the case and will be more stable during transport of a load.

There are however a number of considerations and limitations particular to this TMFL configuration. First of all, it is desirable to keep the frame opening between the side bars as wide as possible so that the TMFL is able to pick up wider loads. If the frame opening between the side bars is reduced, this will reduce the physical size of heavy goods that may be picked up, thereby reducing the usefulness of the forklift. However, it is not possible to simply increase the frame opening between the side bars unchecked, as the total width of the forklift cannot protrude outwardly beyond the sides of the carrying vehicle during transit. The forklift width is therefore limited by the carrying vehicle's dimensions to a certain degree.

One could argue that it would be possible to increase the frame opening between the side bars without increasing the overall width of the TMFL by having non-driven front wheels. However, this is impractical as the majority of the weight of the TMFL would be located away from the driven rear wheel which would result in a TMFL that was difficult to manoeuvre and less effective in operation. Furthermore, three-wheel drive is necessary to navigate rough terrain and climb obstacles such as kerbs. It is therefore necessary to provide driven front wheels. However, this requires a motor to drive the front wheel. This problem becomes particularly acute in electric vehicles, as it is understood that the electric motor and associated gearing to drive the front wheel will take up significant space in the side bar, reducing the frame opening between the side bars.

As the dimensions of the side bar increase to accommodate the electric motor and gearing, not only does this increase the weight and the cost of the side bar, but this can also lead to a reduction of the TMFL's ground clearance, i.e. the distance between the underside of the side bar and the ground. A reduction in ground clearance will negatively impact the TMFL's ability to mount obstacles such as kerbs and the like.

In addition to the foregoing, there are a number of other design limitations particular to TMFLs that should be taken into consideration. For example, the amount by which the TMFL protrudes from the rear of a carrying vehicle during transit, often referred to as overhang, is regulated by law in many countries. Therefore, increases in the dimensions of the rear wheel assembly are also disadvantageous. Furthermore, the greater the overhang, the greater the forces applied by the TMFL on the tines and mounting equipment. This necessitates more robust, heavier tines and mounting equipment which is undesirable for the reasons outlined above.

GB Patent Application Publication No. GB1,092,281, in the name of Ransomes Sims & Jeffries Limited, discloses a forklift reach truck with front wheels having reduction gearing housed within a tubular stub axle.

Further, document WO 2008/129447 A1 discloses a truck mounted forklift comprising a U-shaped chassis, a pair of front wheels and a rear wheel located substantially centrally on a rear cross bar, a lifting assembly comprising a fork carriage and a pair of forks, a driver's station and a battery pack mounted on the chassis, wherein which each of the front wheels is provided with a dedicated electric wheel motor assembly.

It is an object of the present invention to provide an electrically powered TMFL that overcomes at least one of these problems. It is a further object of the invention to provide a useful alternative choice to the consumer.

### Statements of Invention

According to the invention there is provided a truck mounted forklift (TMFL) comprising a U-shaped chassis having a pair of forwardly projecting side bars bridged by a rear cross bar, a pair of front wheels, one at the forwardmost end of each of the side bars, and a rear wheel located substantially centrally on the rear cross bar, a lifting assembly mounted on the U-shaped chassis comprising a fork carriage and a pair of forks mounted on the fork carriage, the lifting assembly being configured to provide adjustment to the height and the reach of the forks, a driver's station mounted on the chassis and a battery pack mounted on the chassis, and in which each of the front wheels is provided with a dedicated electric wheel motor assembly, each of the electric wheel motor assemblies comprising an interior permanent magnet (IPM) motor having a drive shaft, a planetary gear box coupled to the IPM motor, the planetary gear box being mounted axially in-line with and driven by the drive shaft, in which the IPM motor is mounted substantially internal the side bar and the planetary gear box is mounted substantially internal the bounds of the wheel rim.

By having such a TMFL, the electric wheel motor assembly to drive the front wheels will be very compact and will not substantially increase the maximum width of the forklift or substantially reduce the frame opening between the side bars. This is highly advantageous as the forklift will be able to pick up and put down wider heavy loads rearward of the front wheels than would otherwise be the case. At the same time, the TMFL will not protrude outwardly beyond the sides of the carrying vehicle during transit. In addition, the construction is efficient in operation with efficient power transfer from the motor to the wheels via the gear box. This will reduce the power requirement and increase battery life.

In one embodiment of the invention there is provided a truck mounted forklift in which the gear box is encased in a hub casing, the hub casing having a plurality of coupling members for engagement of a wheel. This is seen as a useful way of coupling the electric wheel motor assembly to the wheel of the TMFL. The gear box effectively becomes a component of the wheel, utilizing the space in the wheel to good effect.

In one embodiment of the invention there is provided a truck mounted forklift in which the coupling members comprise a plurality of bolts circumferentially spaced around the hub casing.

In one embodiment of the invention there is provided a truck mounted forklift in which there is provided a mounting plate for securing the electric wheel motor assembly to the side bar. Preferably, the mounting plate will be positioned intermediate the IPM motor and the planetary gear box. The mounting plate will enable the electric wheel motor assembly to be securely fastened in position to the side bar. The other components may be serviced or removed without the need to remove all of the components from the TMFL, thereby simplifying and speeding up repair and servicing.

In one embodiment of the invention there is provided a truck mounted forklift in which the motor of the electric wheel motor assembly is a 10kW motor.

In one embodiment of the invention there is provided a truck mounted forklift in which the rear wheel is provided with a dedicated electric rear wheel motor assembly, the electric rear wheel motor assembly comprising an interior permanent magnet (IPM) motor having a drive shaft, a planetary gear box coupled to the IPM motor, the planetary gear box being mounted axially in-line with and driven by the drive shaft, in which the planetary gear box is mounted substantially internal the bounds of the wheel rim of the rear wheel. This is seen as a useful implementation of the invention. By having such a configuration, the rear wheel will also be compact which is useful for both weight distribution, handling and also for reducing the overhang of the TMFL, (i.e. the amount by which the TMFL protrudes rearwardly from the carrying vehicle) another serious consideration in TMFL construction.

In one embodiment of the invention there is provided a truck mounted forklift in which electric rear wheel motor assembly comprises a brake assembly intermediate the IPM motor and the planetary gear box. This is seen as a particularly useful aspect of the present invention. In this way, it is possible to incorporate a safety brake into the rear wheel that will prevent inadvertent movement of the forklift when the TMFL is turned off or parked on a hill. The construction is also advantageously compact and although it will tend to add some length to the electric rear wheel motor assembly, it is advantageous to mount it on the rear wheel as this will avoid narrowing of the distance between the side bars and will provide an effective braking mechanism.

In one embodiment of the invention there is provided a truck mounted forklift in which the brake assembly is a spring-applied electro-magnetic brake disc that has a default locked configuration and is transitioned from a locked configuration to a release configuration by application of an electrical current. This is seen as a particularly useful configuration as it will be automatically applied once the electric forklift is turned off and can be disengaged on the forklift being turned on again. This is a useful safety feature of the TMFL.

In one embodiment of the invention there is provided a truck mounted forklift in which the spring force of the spring-applied electro-magnetic brake disc is greater than or equal to 60Nm.

In one embodiment of the invention there is provided a truck mounted forklift in which the motor of the electric rear wheel motor assembly is a 20kW motor.

In one embodiment of the invention there is provided a truck mounted forklift in which the planetary gear box is of the order of a 47:1 planetary gear box operable to reduce the speed and increase the torque output of the motor. Preferably, the gearing ratio is the same for all the wheels.

In one embodiment of the invention there is provided a truck mounted forklift in which the battery pack mounted on the chassis drives each of the IPM motors.

### Detailed Description of the Invention

The invention will now be more clearly understood from the following description of some embodiments thereof given by way of example only with reference to the accompanying drawings, in which:-
Figure 1 is a front view of a truck mounted forklift according to the invention;
Figure 2 is a side view of a truck mounted forklift according to the invention;
Figure 3 is a perspective view of an electric wheel motor assembly;
Figure 4 is a rear perspective view of a gearbox of the electric wheel motor assembly of Figure 3;
Figure 5 is a perspective view of the gearbox of the electric wheel motor assembly with parts thereof shown in ghost outline to illustrate internal detail, connected to an alternative motor;
Figure 6 is an exploded view of the electric wheel motor assembly;
Figure 7 is a perspective view of the IPM motor component of the electric wheel motor assembly;
Figure 8 is a view similar to Figure 7 shown in partial cross-section;
Figure 9 is a view of a side bar with the electric wheel motor assembly mounted thereon;
Figure 10 is view similar to Figure 9 with a wheel mounted on the electric wheel motor assembly;
Figure 11 is a view of the sidebar, the wheel and the electric wheel motor assembly shown in partial outline;
Figure 12 is a front view of a truck mounted forklift according to the invention shown in partial outline;
Figure 13 is a rear perspective view of the TMFL according to the invention;
Figure 14 is view similar to Figure 13 with many of the components of the TMFL shown in ghost outline;
Figure 15 is a perspective view of a rear wheel assembly incorporating the electric rear wheel motor assembly according to the invention;
Figure 16 is view similar to Figure 15 with parts of the rear wheel assembly shown in ghost outline;
Figure 17 is an exploded view of the electric rear wheel motor assembly;
Figure 18 is a perspective view of a brake assembly for the electric rear wheel motor assembly; and
Figure 19 is an exploded view of an alternative electric wheel motor assembly.

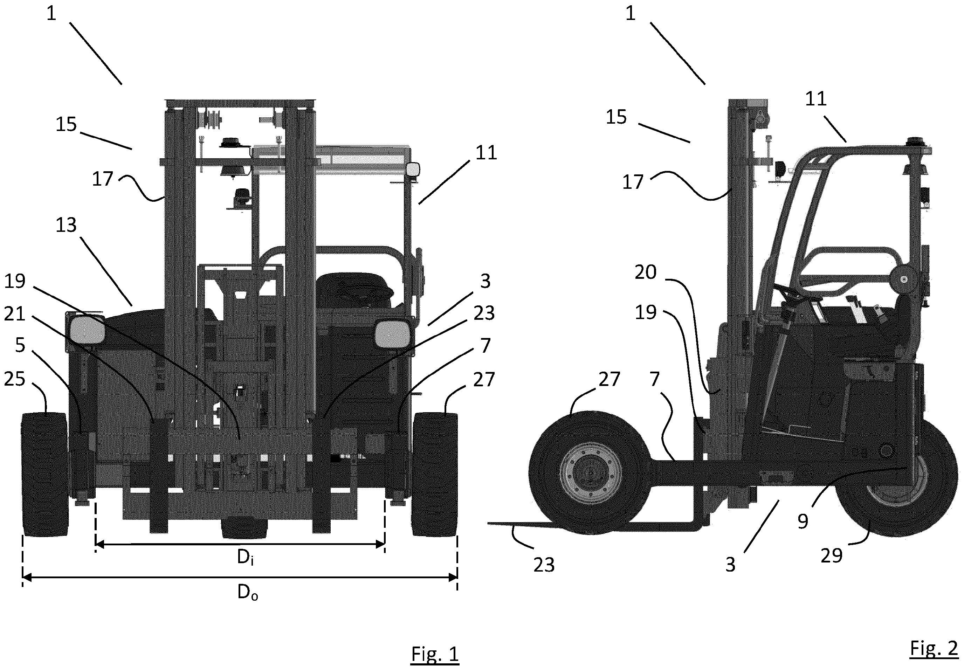

Referring to Figures 1 and 2, there is shown a truck mounted forklift (TMFL), indicated generally by the reference numeral 1, comprising a U-shaped chassis 3 having a pair of side bars 5, 7 and a rear cross bar 9 bridging the two side bars. A driver's station 11, a battery pack 13, and a lifting assembly 15 are mounted on the chassis. The lifting assembly comprises an upright mast 17 having a fork carriage 19 carrying a pair of forks 21, 23. The upright mast 17 is a multi-stage mast so that the forks 21, 23 are height adjustable up and down the mast and there is further provided a pantograph arrangement 20 to alter the reach of the forks. As an alternative to a pantograph arrangement, extensible forks could be provided. Indeed, the mast may also be mounted on a mast carriage slidable forwards and backwards along the U-shaped chassis.

There is further provided a pair of front wheels 25, 27, one at the forwardmost end of each of the side bars 5, 7, and a steerable rear wheel 29 located substantially centrally along the rear cross bar 9. Referring specifically to Figure 2, it can be seen that when the forks 21, 23 are retracted and lowered as shown, they are in a position capable of picking up a load (not shown) where the majority of the weight of the load will be rearward of the front wheels.

Referring specifically to Figure 1, it can be seen that the internal distance, Dᵢ, between the side bars will restrict the size of loads that may be picked up or placed down rearward of the front wheels. It is important therefore that the internal distance, Dᵢ, is not too narrow. Furthermore, the outer distance, Dₒ, from the outside surface of one front wheel 25 to the outer surface of the other front wheel 27 is illustrated. As mentioned above, it is important that the outer distance, Dₒ, does not exceed the width of the carrying vehicle (not shown).

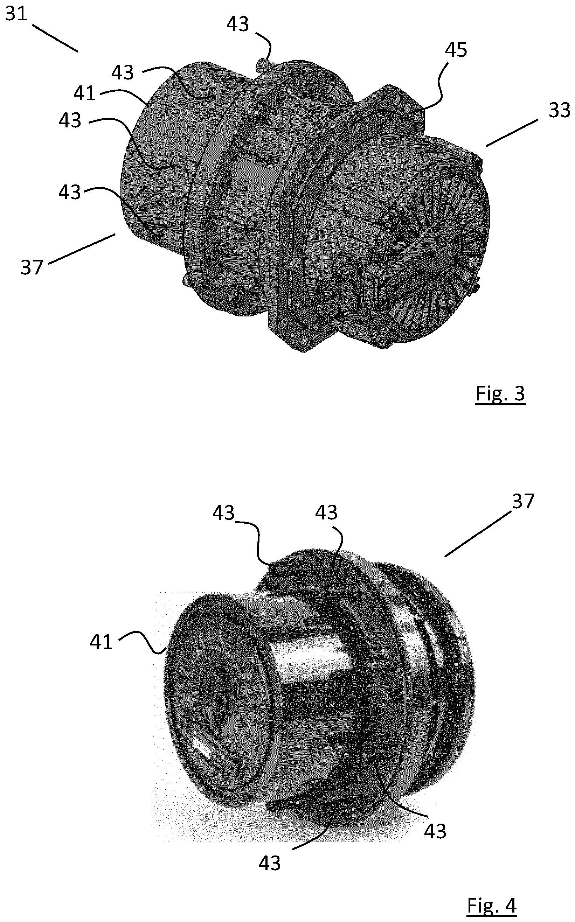

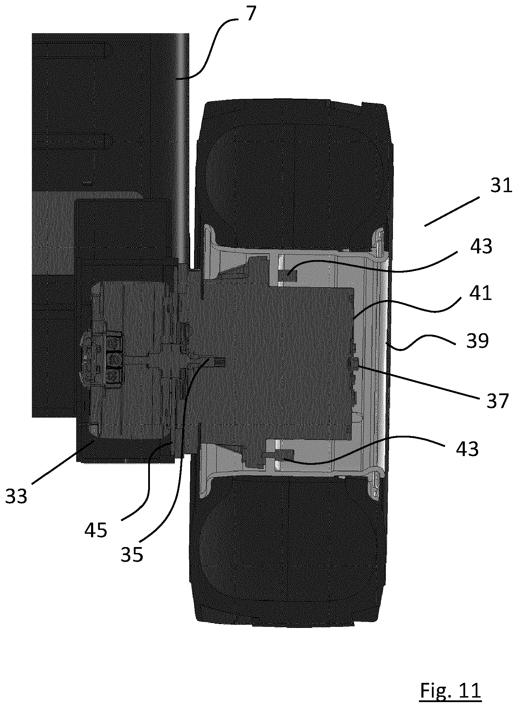

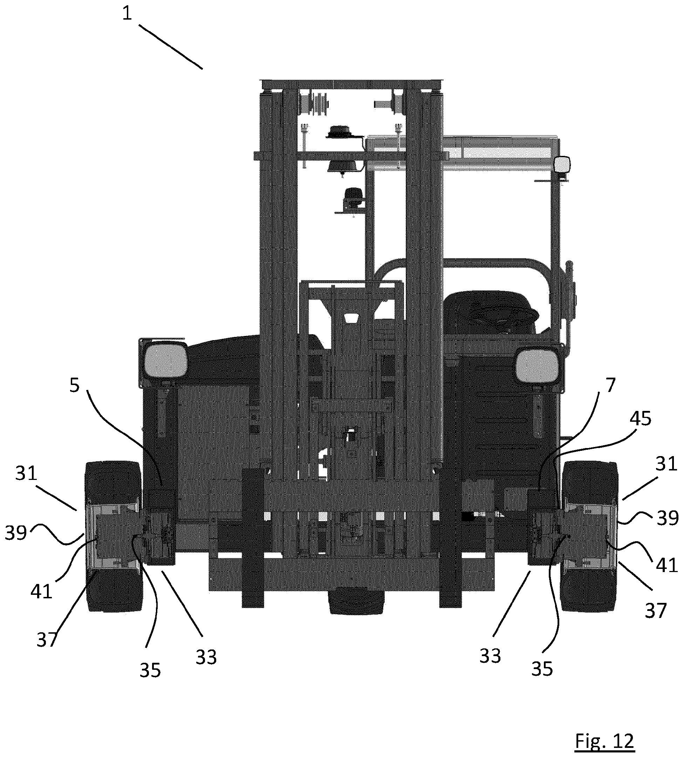

Referring now to Figures 3 to 12 inclusive, there is shown various advantageous aspects of the TMFL 1 according to the invention. Referring first of all to Figures 11 and 12, there is shown views of a dedicated electric wheel motor assembly 31 for each of the front wheels 25, 27 incorporated into the forklift 1. Each of the electric wheel motor assemblies 31 comprises an interior permanent magnet (IPM) motor 33 having a drive shaft 35, and a planetary gear box 37 coupled to the IPM motor 33. The planetary gear box 37 is mounted axially in-line with and driven by the drive shaft 35 of the IPM AC motor 33. Importantly, the IPM motor 33 is mounted substantially internal the respective side bar 5, 7 and the planetary gear box is mounted substantially internal the bounds of the wheel rim 39.

The planetary gear box is encased in a hub casing 41, and the hub casing has a plurality of coupling members 43, in this case provided by threaded bolts, arranged circumferentially around its surface for engagement of the wheel rim 39. There is further provided a mounting plate 45 located substantially intermediate the IPM motor 33 and the planetary gear box 37 for securing the electric wheel motor assembly 31 to the side bar 5, 7. It can be seen that the particular construction is compact with the IPM motor being mounted in the side bar 5, 7 and the planetary gear box 37 being mounted inside the confines of the wheel rim 39. In this way, the internal distance, Dᵢ, is not reduced substantially and the outer distance, Dₒ, is not substantially widened. Furthermore, by having the IPM motor and the planetary gear box axially aligned in this manner, the power transfer from the electric motor to the gearing will be efficient, reducing power consumption and increasing battery life.

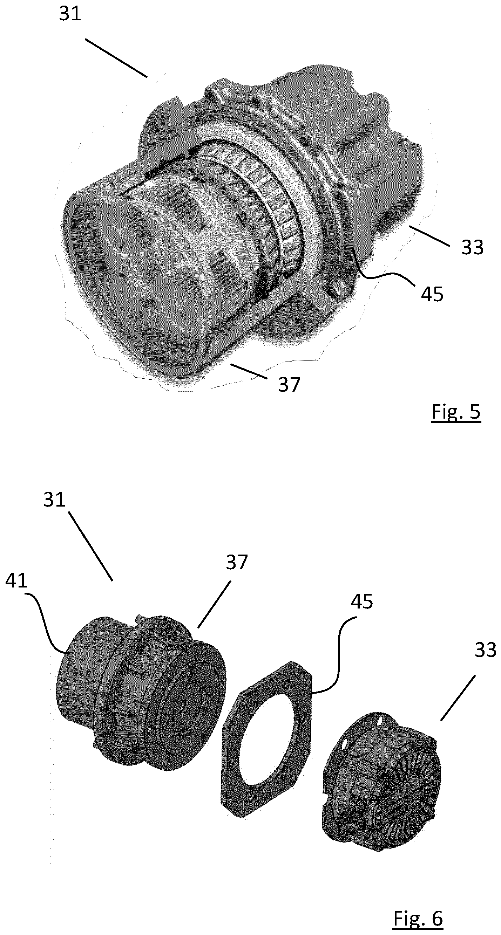

Referring specifically to Figures 3 to 6, there is shown representations of the electric wheel motor assembly 31 and components thereof in more detail, free of the TMFL. The electric wheel motor assembly 31 comprises a IPM AC motor 33, a planetary gear box 37 and a mounting plate 45. The planetary gear box 37 is shown in more detail in Figure 5 where parts of the wheel hub 41 have been shown in ghost outline. The planetary gear box comprises a 47:1 gearing ratio to reduce the speed and increase the torque output of the motor.

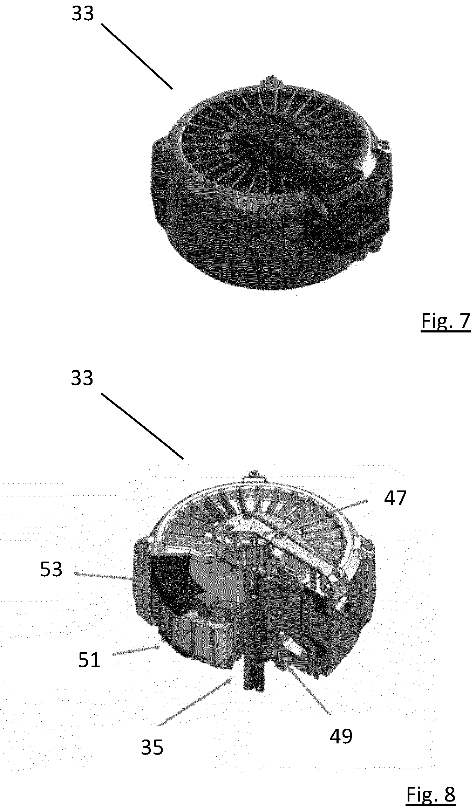

Referring specifically to Figures 7 and 8, there is shown representations of the IPM AC motor 33. Referring specifically to Figure 8, where the IPM AC motor is shown in partial cross section, the various components of the motor can be seen including the drive shaft 35, an encoder 47, a cantilevered rotor design 49, an overmoulding 51 and an encapsulation 53 of the motor. The permanent magnets (not shown) are stored in slots formed in the rotor.

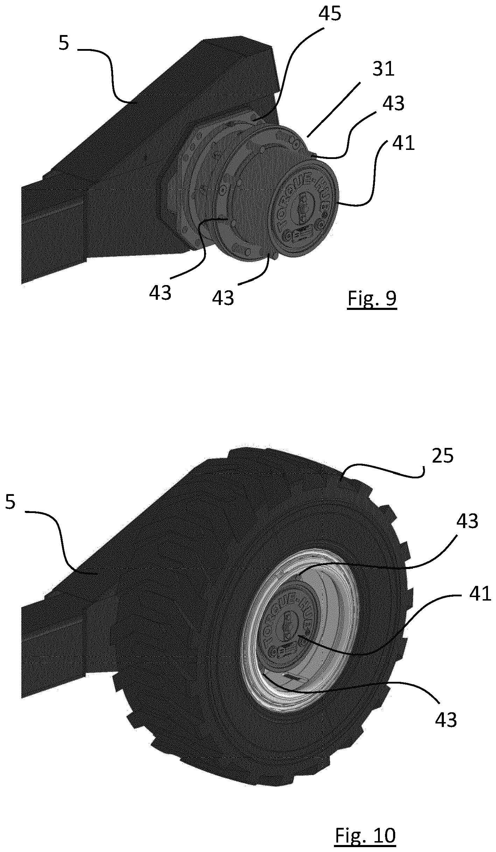

Referring specifically to Figure 9, the electric wheel motor assembly 31 is shown mounted onto a side bar 5 of a TMFL according to the invention. The mounting plate 45 may be welded or bolted into position onto the side bar 5. The wheel hub casing 41 and the coupling members 43 are ready for engagement of a wheel. Referring to Figure 10, the wheel 25 has been connected to the wheel hub casing 41 and coupling members 43.

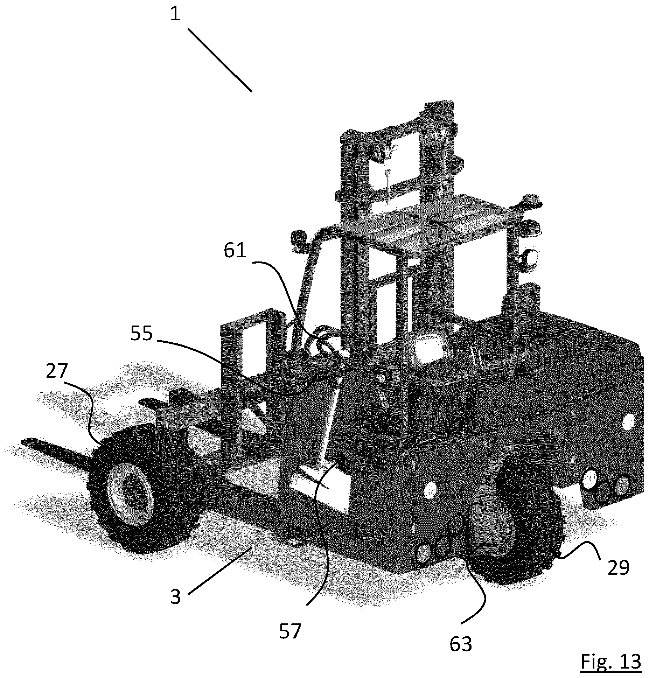

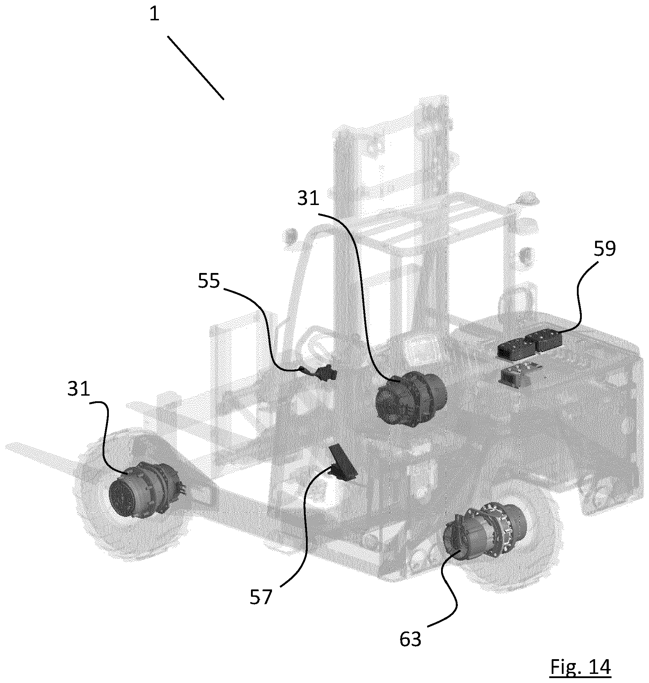

Referring to Figures 13 and 14, there is shown various perspective views of the TMFL 1 according to the invention with (as shown in Figure 14) some of the components of the drive system and their positions shown in detail. The drive system includes the pair of electric wheel motor assemblies 31, one for each of the front wheels 25, 27, a forward reverse lever 55, an accelerator pedal 57, a controller unit 59, a steering wheel 61 and an electric rear wheel motor assembly 63. The controller unit 59 preferably comprises a plurality of sub-units, one for each motor.

In use, control lines (not shown) are provided to relay control signals and sensor data to and/or from the forward reverse lever 55, the accelerator pedal 57, the steering wheel 61, the front wheel electric wheel motor assemblies 31 and the electric rear wheel motor assembly 63. Based on the control inputs and the sensor inputs, the controller unit 59 delivers appropriate operating signals and power from the battery 13 to each of the electric wheel motor assemblies 31 and the electric rear wheel motor assembly 63.

Preferably, steering of the forklift is controlled hydraulically, in which case the steering wheel itself would not typically be used to provide a control signal directly. Instead, a steering cylinder responsive to the steering wheel would be used to provide the control signal. However, it is possible to have steer by wire, in which case a steering wheel and encoder that supply a signal directly to the control system could be provided.

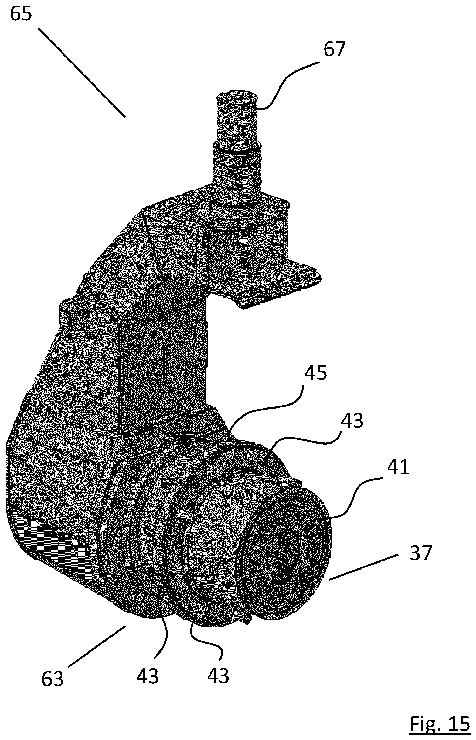

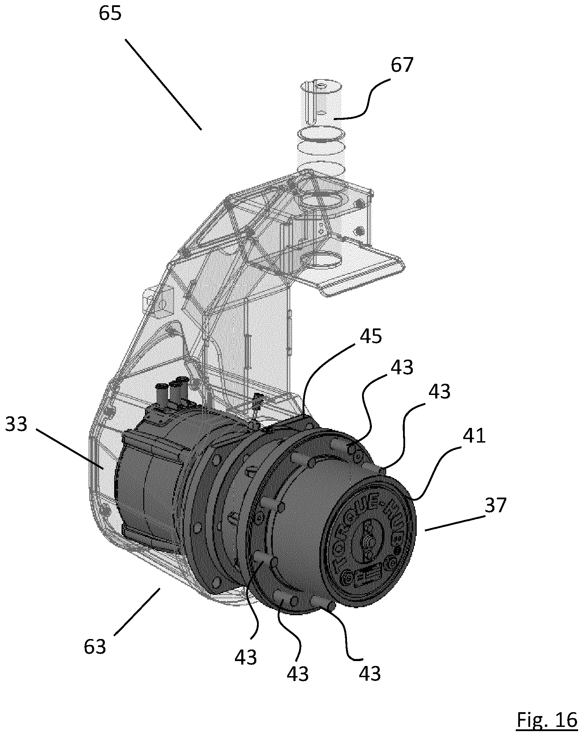

Referring to Figures 15 to 18 inclusive, there are shown views of the steered rear wheel's mounting column 65, including the electric rear wheel motor assembly 63, where like parts have been given the same reference numeral as before. The steered rear wheel's mounting column 65 is able to pivot about steering axle 67 and means (not shown) are provided to couple the input from the steering wheel 61 to the steered rear wheel's mounting column 65 and to cause the steered rear wheel's mounting column to rotate about steering axle 67. The steering axle 67 and means to pivot the mounting column 65 about the steering axle are standard features of a TMFL and will not be described in more detail here as it would be understood to the skilled addressee.

The difference between the implementation shown and the standard steered rear wheel mounting columns is that there is provided an electric rear wheel motor assembly 63, similar in construction to the electric wheel motor assembly 31 for each of the front wheels. The electric rear wheel motor assembly 63 differs from the electric wheel motor assembly 31 in that there is provided a braking assembly 68, more specifically a spring-applied electro-magnetic brake disc 69. The braking disc is positioned intermediate the motor 33 and the gear box 37. The braking disc is spring loaded and is released upon provision of an electrical current. In this way, if power is turned off or cut to the braking assembly, the braking disc will engage, thereby acting against and preventing rotation of the wheel. Preferably, the spring force of the spring-applied electro-magnetic brake disc is of the order of 60Nm. Once power is restored to the braking assembly, the braking disc will be released. It is envisaged however that higher braking torques, up to the order of 100Nm, may be required for heavier machines. This may also depend in part on the gearbox ratio.

It is envisaged that instead of providing an electro-magnetic brake disc 69 intermediate the motor 33 and the gear box 37, the braking disc could be positioned on the opposite side of the motor in a position where it can operate to prevent operation of the motor and rotation of the drive shaft.

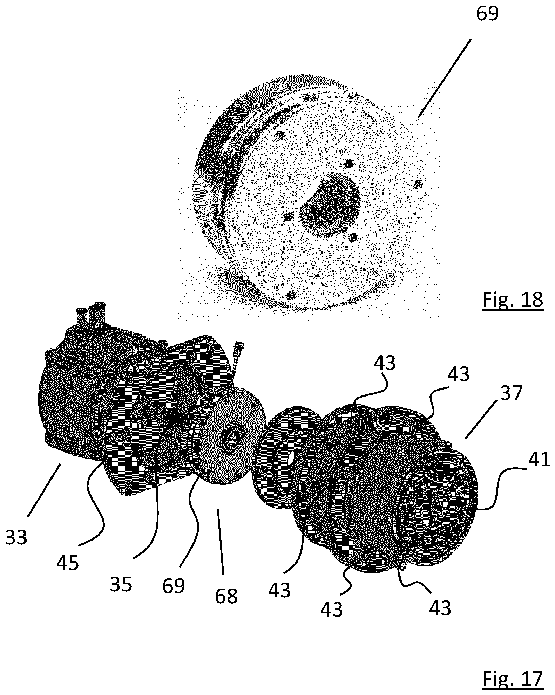

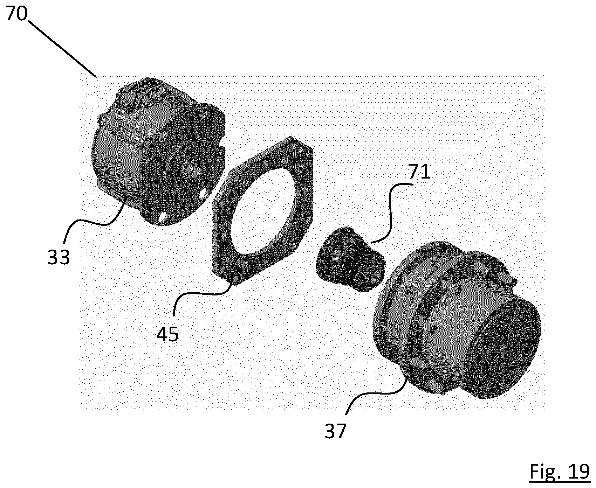

Referring now to Figure 19, there is shown an alternative embodiment of electric wheel motor assembly, indicated generally by the reference numeral 70, where like parts have been given the same reference numeral as before. The electric wheel motor assembly 70 is similar to the electric rear wheel motor assembly 63 shown in Figure 17 with the exception that instead of an electro-magnetic brake disc, there is provided a hydraulic brake component 71. The hydraulic brake component 71 works in a similar manner to the electromagnetic brake in that the brake is spring applied. However, instead of supplying an electric current to deactivate the brake, the brake is released by application of hydraulic pressure.

In addition to fitting a brake in the rear wheel assembly, it is envisaged that a braking mechanism could be provided in one or both front wheels, as well as or instead of the braking mechanism in the rear wheel. There is the option for fitting a brake in the front motors only, or in all three motors. Although it is more difficult to fit the brakes in the front motors, if a single brake is not sufficient then it may be necessary to provide two, or indeed three brakes.

In the embodiments shown, the electric rear wheel motor assembly 63 is provided with a 20kW motor and the electric front wheel motor assembly 31 is provided with a 10kW motor. In the embodiment shown, the lifting assembly comprises a fixed upright mast. However, it will be understood that other configurations of lifting assembly would also be applicable including, for example, an upright mast mounted on a carriage that is in turn slidably mounted on the side bars, slidable forwards and backwards on the side bars, or indeed a telescopic boom arrangement.

In the embodiment shown, the front wheels are located entirely on the outside of the side bar. In other words, the front wheels are located to one side of the side bar remote from the main longitudinal axis of the TMFL. The IPM motor is located inside the side bar.

In this specification the terms "comprise, comprises, comprised and comprising" and the terms "include, includes, included and including" are all deemed totally interchangeable and should be afforded the widest possible interpretation.

The invention is not limited solely to the embodiments hereinbefore described but may be varied in both construction and detail within the scope of the appended claims.

## Claims

1. A truck mounted forklift (TMFL) (1) comprising a U-shaped chassis (3) having a pair of forwardly projecting side bars (5, 7) bridged by a rear cross bar (9), a pair of front wheels (25, 27), one at the forwardmost end of each of the side bars, and a rear wheel (29) located substantially centrally on the rear cross bar, a lifting assembly (15) mounted on the U-shaped chassis comprising a fork carriage (19) and a pair of forks (21, 23) mounted on the fork carriage, the lifting assembly being configured to provide adjustment to the height and the reach of the forks, a driver's station (11) mounted on the chassis and a battery pack (13) mounted on the chassis, and in which each of the front wheels is provided with a dedicated electric wheel motor assembly (31), each of the electric wheel motor assemblies comprising an interior permanent magnet (IPM) motor (33) having a drive shaft (35), a planetary gear box (37) coupled to the IPM motor, the planetary gear box being mounted axially in-line with and driven by the drive shaft (35), in which the IPM motor (33) is mounted substantially internal the side bar (5, 7) and the planetary gear box (37) is mounted substantially internal the bounds of a wheel rim (39) of the front wheel (25, 27).

2. A truck mounted forklift (1) as claimed in claim 1 in which the planetary gear box (37) is encased in a wheel hub casing (41), the wheel hub casing (41) having a plurality of coupling members (43) for engagement of a wheel.

3. A truck mounted forklift (1) as claimed in claim 2 in which the coupling members (43) comprise a plurality of bolts circumferentially spaced around the hub casing.

4. A truck mounted forklift (1) as claimed in any preceding claim in which there is provided a mounting plate (45) for securing the electric wheel motor assembly to the side bar.

5. A truck mounted forklift (1) as claimed in claim 4 in which the mounting plate (45) is located intermediate the IPM motor and the planetary gear box.

6. A truck mounted forklift (1) as claimed in any preceding claim in which the IPM motor (33) of the electric wheel motor assembly is a 10kW motor.

7. A truck mounted forklift (1) as claimed in any preceding claim in which the rear wheel (29) is provided with a dedicated electric rear wheel motor assembly (63), the electric rear wheel motor assembly comprising an interior permanent magnet (IPM) motor (33) having a drive shaft (35), a planetary gear box (37) coupled to the IPM motor, the planetary gear box being mounted axially in-line with and driven by the drive shaft, in which the planetary gear box is mounted substantially internal the bounds of the wheel rim (39) of the rear wheel (29).

8. A truck mounted forklift (1) as claimed in claim 7 in which electric rear wheel motor assembly (63) comprises a brake assembly (68) intermediate the IPM motor and the planetary gear box.

9. A truck mounted forklift (1) as claimed in claim 8 in which the brake assembly (68) is a spring-applied electro-magnetic brake disc that has a default locked configuration and is transitioned from a locked configuration to a release configuration by application of an electrical current.

10. A truck mounted forklift (1) as claimed in claim 9 in which the spring force of the spring-applied electro-magnetic brake disc (69) is greater than or equal to 60Nm.

11. A truck mounted forklift (1) as claimed in claims 7 to 10 in which the IPM motor (33) of the electric rear wheel motor assembly (63) is a 20kW motor.

12. A truck mounted forklift (1) as claimed in any preceding claim in which the planetary gear box (37) is of the order of a 47:1 planetary gear box operable to reduce the speed and increase the torque output of the motor.

13. A truck mounted forklift (1) as claimed in any preceding claim in which the battery pack (13) mounted on the chassis drives each of the IPM motors.

## Patentansprüche

1. Mitnehm-Gabelstapler (TMFL) (1), der Folgendes umfasst: einen U-förmigen Rahmen (3) mit einem Paar nach vorne vorstehenden Längsträgern (5, 7), die von einem hinteren Querträger (9) überbrückt werden, ein Paar Vorderräder (25, 27), jeweils eines an dem vordersten Ende jedes der Längsträger, und ein im Wesentlichen mittig an dem hinteren Querträger angeordnetes Hinterrad (29), eine an dem U-förmigen Rahmen angebrachte Hebeanordnung (15), umfassend einen Gabelschlitten (19) und ein an dem Gabelschlitten angebrachtes Paar Gabeln (21, 23), wobei die Hebeanordnung dazu konfiguriert ist, für das Verstellen der Höhe und Reichweite der Gabeln zu sorgen, einen an dem Rahmen angebrachten Fahrerstand (11) und einen an dem Rahmen angebrachten Batteriesatz (13), und wobei die Vorderräder jeweils mit einer fest zugeordneten Elektroradmotoranordnung (31) versehen sind, wobei die Elektroradmotoranordnungen jeweils einen IPM-Motor (Interior Permanent Magnet Motor) (33) mit einer Antriebswelle (35), ein an den IPM-Motor gekoppeltes Planetengetriebe (37) umfassen, wobei das Planetengetriebe axial mit der Antriebswelle (35) fluchtend angebracht ist und davon angetrieben wird, wobei der IPM-Motor (33) im Wesentlichen innerhalb des Längsträgers (5, 7) angebracht ist und das Planetengetriebe (37) im Wesentlichen innerhalb der Grenzen einer Felge (39) des Vorderrads (25, 27) angebracht ist.

2. Mitnehm-Gabelstapler (1) nach Anspruch 1, wobei das Planetengetriebe (37) in einem Radnabengehäuse (41) eingeschlossen ist, wobei das Radnabengehäuse (41) eine Vielzahl von Kopplungselementen (43) für den Eingriff mit einem Rad aufweist.

3. Mitnehm-Gabelstapler (1) nach Anspruch 2, wobei die Kopplungselemente (43) eine Vielzahl von Gewindebolzen umfassen, die in Umfangsrichtung um das Nabengehäuse beabstandet angeordnet sind.

4. Mitnehm-Gabelstapler (1) nach einem der vorangehenden Ansprüche, wobei eine Anbauplatte (45) zum Befestigen der Elektroradmotoranordnung an dem Längsträger bereitgestellt ist.

5. Mitnehm-Gabelstapler (1) nach Anspruch 4, wobei die Anbauplatte (45) zwischen dem IPM-Motor und dem Planetengetriebe angeordnet ist.

6. Mitnehm-Gabelstapler (1) nach einem der vorangehenden Ansprüche, wobei es sich bei dem IPM-Motor (33) der Elektroradmotoranordnung um einen 10-kW-Motor handelt.

7. Mitnehm-Gabelstapler (1) nach einem der vorangehenden Ansprüche, wobei das Hinterrad (29) mit einer fest zugeordneten Elektrohinterradmotoranordnung (63) versehen ist, wobei die Elektrohinterradmotoranordnung einen IPM-Motor (33) (Interior Permanent Magnet Motor) mit einer Antriebswelle (35), einem an den IPM-Motor gekoppelten Planetengetriebe (37) umfasst, wobei das Planetengetriebe axial mit der Antriebswelle fluchtend angebracht ist und davon angetrieben wird, wobei das Planetengetriebe im Wesentlichen innerhalb der Grenzen der Felge (39) des Hinterrads (29) angebracht ist.

8. Mitnehm-Gabelstapler (1) nach Anspruch 7, wobei die Elektrohinterradmotoranordnung (63) eine Bremsenanordnung (68) zwischen dem IPM-Motor und dem Planetengetriebe umfasst.

9. Mitnehm-Gabelstapler (1) nach Anspruch 8, wobei es sich bei der Bremsenanordnung (68) um eine federbetätigte elektromagnetische Bremsscheibe handelt, die eine gesperrte Standardkonfiguration aufweist und durch Anlegen eines elektrischen Stroms aus einer gesperrten Konfiguration in eine Lösekonfiguration überführt wird.

10. Mitnehm-Gabelstapler (1) nach Anspruch 9, wobei die Federkraft der federbetätigten elektromagnetischen Bremsscheibe (69) größer als oder gleich 60 Nm ist.

11. Mitnehm-Gabelstapler (1) nach Ansprüchen 7 bis 10, wobei es sich bei dem IPM-Motor (33) der Elektrohinterradmotoranordnung (63) um einen 20-kW-Motor handelt.

12. Mitnehm-Gabelstapler (1) nach einem der vorangehenden Ansprüche, wobei es sich bei dem Planetengetriebe (37) um ein Planetengetriebe der Größenordnung 47 : 1 handelt, das wirksam ist, um die Drehzahl des Motors zu verringern und dessen Ausgangsdrehmoment zu erhöhen.

13. Mitnehm-Gabelstapler (1) nach einem der vorangehenden Ansprüche, wobei der an dem Rahmen angebrachte Batteriesatz (13) jeden der IPM-Motoren antreibt.

## Revendications

1. Chariot élévateur à fourche monté sur camion (TMFL) (1) comportant un châssis en forme de U (3) ayant une paire de barres latérales faisant saillie vers l'avant (5, 7) surmontées d'une barre transversale arrière (9), une paire de roues avant (25, 27), l'une au niveau de l'extrémité se trouvant le plus en avant de chacune des barres latérales, et une roue arrière (29) se trouvant de manière sensiblement centrale sur la barre transversale arrière, un ensemble de levage (15) monté sur le châssis en forme de U comportant un tablier porte-fourche (19) et une paire de fourches (21, 23) montées sur le tablier porte-fourche, l'ensemble de levage étant configuré pour procurer un ajustement au niveau de la hauteur et de la portée des fourches, un poste de conduite (11) monté sur le châssis et un bloc-batterie (13) monté sur le châssis, et dans lequel chacune des roues avant est dotée d'un ensemble formant moteur de roue électrique spécialisé (31), chacun des ensembles formant moteur de roue électrique comportant un moteur IPM (aimant permanent intérieur) (33) ayant un arbre d'entraînement (35), une boîte de vitesses à trains planétaires (37) couplée au moteur IPM, la boîte de vitesses à trains planétaires étant montée de manière alignée dans le sens axial sur l'arbre d'entraînement (35) et étant entraînée par celui-ci, dans lequel le moteur IPM (33) est monté sensiblement à l'intérieur de la barre latérale (5, 7) et la boîte de vitesses à trains planétaires (37) est montée sensiblement à l'intérieur des limites d'une jante de roue (39) de la roue avant (25, 27).

2. Chariot élévateur à fourche monté sur camion (1) selon la revendication 1, dans lequel la boîte de vitesses à trains planétaires (37) est enfermée dans un carter de moyeu de roue (41), le carter de moyeu de roue (41) ayant une pluralité d'éléments d'accouplement (43) à des fins de mise en prise d'une roue.

3. Chariot élévateur à fourche monté sur camion (1) selon la revendication 2, dans lequel les éléments d'accouplement (43) comportent une pluralité de boulons espacés dans le sens de la circonférence autour du carter de moyeu.

4. Chariot élévateur à fourche monté sur camion (1) selon l'une quelconque des revendications précédentes, dans lequel se trouve une plaque de montage (45) servant à des fins d'assujettissement de l'ensemble formant moteur de roue électrique sur la barre latérale.

5. Chariot élévateur à fourche monté sur camion (1) selon la revendication 4, dans lequel la plaque de montage (45) est située entre le moteur IPM et la boîte de vitesses à trains planétaires.

6. Chariot élévateur à fourche monté sur camion (1) selon l'une quelconque des revendications précédentes, dans lequel le moteur IPM (33) de l'ensemble formant moteur de roue électrique est un moteur de 10 kW.

7. Chariot élévateur à fourche monté sur camion (1) selon l'une quelconque des revendications précédentes, dans lequel la roue arrière (29) est dotée d'un ensemble formant moteur de roue arrière électrique spécialisé (63), l'ensemble formant moteur de roue arrière électrique comportant un moteur IPM (aimant permanent intérieur) (33) ayant un arbre d'entraînement (35), une boîte de vitesses à trains planétaires (37) couplée au moteur IPM, la boîte de vitesses à trains planétaires étant montée de manière alignée dans le sens axial sur l'arbre d'entraînement et étant entraînée par celui-ci, dans lequel la boîte de vitesses à trains planétaires est montée sensiblement à l'intérieur des limites de la jante de roue (39) de la roue arrière (29).

8. Chariot élévateur à fourche monté sur camion (1) selon la revendication 7, dans lequel l'ensemble formant moteur de roue arrière électrique (63) comporte un ensemble de freinage (68) entre le moteur IPM et la boîte de vitesses à trains planétaires.

9. Chariot élévateur à fourche monté sur camion (1) selon la revendication 8, dans lequel l'ensemble de freinage (68) est un disque de frein électromagnétique à ressort qui a une configuration verrouillée par défaut et qui passe d'une configuration verrouillée à une configuration libérée par l'application d'un courant électrique.

10. Chariot élévateur à fourche monté sur camion (1) selon la revendication 9, dans lequel la force du ressort du disque de frein électromagnétique à ressort (69) est supérieure ou égale à 60 Nm.

11. Chariot élévateur à fourche monté sur camion (1) selon les revendications 7 à 10, dans lequel le moteur IPM (33) de l'ensemble formant moteur de roue arrière électrique (63) est un moteur de 20 kW.

12. Chariot élévateur à fourche monté sur camion (1) selon l'une quelconque des revendications précédentes, dans lequel la boîte de vitesses à trains planétaires (37) est de l'ordre d'une boîte de vitesses à trains planétaires de type 47:1 servant à réduire la vitesse et à augmenter le couple de sortie du moteur.

13. Chariot élévateur à fourche monté sur camion (1) selon l'une quelconque des revendications précédentes, dans lequel le bloc-batterie (13) monté sur le châssis entraîne chacun des moteurs IPM.
